(19) Europäisches Patentamt
European Patent Office
Office européen des brevets

(11) EP 3 511 179 B1

(12) **EUROPEAN PATENT SPECIFICATION**

(45) Date of publication and mention of the grant of the patent:
**18.11.2020 Bulletin 2020/47**

(51) Int Cl.:
***B60C 1/00*** *(2006.01)* ***C08L 9/00*** *(2006.01)*
***C08L 9/06*** *(2006.01)* ***C08K 3/36*** *(2006.01)*
***C08L 93/04*** *(2006.01)*

(21) Application number: **18211586.5**

(22) Date of filing: **11.12.2018**

(54) **RUBBER COMPOSITION FOR TIRE**

KAUTSCHUKZUSAMMENSETZUNG FÜR REIFEN

COMPOSITION DE CAOUTCHOUC POUR PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2018 JP 2018002846**

(43) Date of publication of application:
**17.07.2019 Bulletin 2019/29**

(73) Proprietor: **Sumitomo Rubber Industries, Ltd.**
**Kobe-shi, Hyogo-ken 651-0072 (JP)**

(72) Inventor: **MIYAZAKI, Tatsuya**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 740 757**
**JP-B2- 5 362 606**
**US-A1- 2013 331 498**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 511 179 B1

## Description

BACKGROUND OF THE INVENTION

Field of the Invention

The present invention relates to a rubber composition for a tread and a tire having a tread formed from the rubber composition.

Description of the Background Art

For a rubber composition for a tire, powdery sulfur is used in general. However, since powdery sulfur with S8 structure has a melting point of 113°C and a polarity (SP value: 10) close to that of carbon disulfide, it is difficult to uniformly disperse the powdery sulfur in diene rubber, such as natural rubber, butadiene rubber, and styrene butadiene rubber, which has a low polarity (SP value: 8 to 9) and is generally used in a rubber composition for a tire, when the powdery sulfur is dissolved into polymer. Therefore, compounded rubber that allows sulfur to be uniformly dispersed in rubber components and has excellent elongation at break, is required to be provided.

Meanwhile, a tire is required to exhibit wet grip performance and wear resistance performance as its important performance. In recent years, from the viewpoint of resource saving, fuel economy performance is required to be improved by improvement of rolling resistance of a tire.

A method in which carbon black is added to a rubber composition in order to improve wear resistance, has been known. However, balance with fuel economy performance and wet grip performance tends to be deteriorated. Furthermore, while butadiene rubber that is advantageous in wear resistance has a low hysteresis loss and good fuel economy performance, the butadiene rubber is disadvantageous in wet grip performance. Thus, when various physical properties of a tire are attempted to be improved, there is trade-off between wear resistance and wet grip performance, and it is difficult to obtain both wear resistance and wet grip performance at the same time.

A rubber composition that allows grip performance and rolling resistance to be improved by alpha-methylstyrene polymer resin being blended as plasticizer is disclosed in Japanese Translation of PCT International Application Publication No.2012-512290. However, wear resistance is not considered, and there is room for further improvement.
JP536206B2 discloses a rubber composition including with respect to 100 parts by mass of a rubber component silica in an amount of 70 parts by mass and carbon black in an amount of 10 parts by mass. Said rubber composition further contains as part of the rubber component 30% by mass of a modified SBR, 30% by mass of an unmodified SBR and 40% by mass of a BR. Said rubber composition further contains 5 parts by mass of maleic acid modified rosin resin.
A rubber composition disclosed in US2013/331498A1 comprises 40 to 75% by mass of butadiene rubber and 25 to 55% by mass of styrene butadiene rubber, per 100 parts by mass of the rubber component. The rubber composition further includes 40 to 120 parts by mass of silica and 15 to 50 parts by mass of carbon black.

SUMMARY OF THE INVENTION

An object of the present invention is to provide a rubber composition, for a tread, which maintains wet grip performance and exhibits excellent wear resistance and elongation at break in a well-balanced manner, and a tire having a tread formed from the rubber composition.

The inventor of the present invention has found, as a result of thorough study, that, when styrene butadiene rubber (SBR), butadiene rubber (BR), silica, and a rosin-based resin are blended at a predetermined ratio, a rubber composition that exhibits excellent wet grip performance, wear resistance, and elongation at break can be obtained, to complete the present invention.

That is, the present invention is directed to

[1] a rubber composition, for a tread, which includes: 90 to 150 parts by mass of an inorganic filler including silica, with respect to 100 parts by mass of a rubber component that includes 35 to 65% by mass of styrene butadiene rubber and 35 to 65% by mass of butadiene rubber; and 0.3 to 40 parts by mass of a rosin-based resin with respect to 100 parts by mass of the rubber component,
[2] the rubber composition according to [1] in which an acid value of the rosin-based resin is 5 to 70,
[3] the rubber composition according to [1] or [2] in which a softening point of the rosin-based resin is 55°C to 130°C,
[4] the rubber composition according to any one of [1] to [3] in which the rosin-based resin is a rosin ester resin,
[5] the rubber composition, according to any one of [1] to [4], which further includes an adhesive resin other than the rosin-based resin, the adhesive resin having a glass transition temperature of not lower than 20°C, and in which a total content of the adhesive resin is 10 to 60 parts by mass,

[6] the rubber composition according to any one of [1] to [5] in which a terpene-based resin is included as the adhesive resin other than the rosin-based resin,
[7] the rubber composition according to any one of [1] to [6] in which a content of the silica in the inorganic filler is not less than 50% by mass,
[8] the rubber composition according to any one of [1] to [7] in which modified low-cis butadiene rubber is contained in the butadiene rubber,
[9] the rubber composition according to any one of [1] to [8] in which aluminium hydroxide is further included in the inorganic filler, and
[10] a tire having a tread formed from the rubber composition, for a tread, according to any one of [1] to [9].

The rubber composition for a tread and the tire having a tread formed from the rubber composition according to the present invention exhibit excellent wet grip performance, wear resistance performance, and elongation at break in a well-balanced manner.

DESCRIPTION OF THE PREFERRED EMBODIMENTS

One embodiment of the present invention is a rubber composition, for a tread, which contains 90 to 150 parts by mass of an inorganic filler containing silica, with respect to 100 parts by mass of a rubber component that contains 35 to 65% by mass of styrene butadiene rubber and 35 to 65% by mass of butadiene rubber, and 0.3 to 40 parts by mass of a rosin-based resin with respect to 100 parts by mass of the rubber component.
In general, when an amount of BR in a rubber composition is increased, although wear resistance is improved, elongation at break is reduced. This may be because, from the viewpoint of morphology, although BR is likely to form an island phase by self-aggregation, when a blended amount of BR is high, the island phase is transformed into a sea phase, and the BR is forcefully stretched, or, from the viewpoint of a SP value, BR has a SP value that is less than SBR, and sulfur is not easily dispersed in BR.
For the rubber composition of the present embodiment, a proportion of SBR and a proportion of BR are determined such that the SBR forms a sea phase and the BR forms an island phase. Furthermore, when a predetermined amount of rosin-based resin is blended in the rubber component, a carboxyl group of the rosin adsorbs sulfur, dispersion is promoted, and the sulfur is distributed in the rubber component, and, furthermore, an aromatic moiety of the rosin absorbs a radical generated during dispersion of the powdery sulfur into polymer, appropriate shear torque is generated in the sulfur, and dispersion is promoted, whereby crosslinking of the rubber component is promoted, resulting in improvement of elongation at break.

<Rubber component>

As a rubber component used in the present embodiment, SBR and BR are preferably used.

(SBR)

The SBR is not particularly limited. Examples of the SBR include unmodified solution-polymerized SBR (S-SBR), unmodified emulsion-polymerized SBR (E-SBR), and modified SBRs (modified S-SBR, modified E-SBR) obtained by these SBRs being modified. Examples of the modified SBR include modified SBR in which the terminal and/or the main chain are modified, and modified SBR (a condensate, one having a branch structure, etc.) coupled by using tin, a silicon compound, or the like.
As the SBR, any one of the SBRs in the above-described examples may be used alone, or two or more of them may be used in combination.
A content of the SBR in the rubber component is not less than 35% by mass, preferably not less than 40% by mass, and more preferably not less than 45% by mass. When the content of the SBR is less than 35% by mass, wet grip performance tends to be deteriorated. The content of the SBR is not greater than 65% by mass, preferably not greater than 63% by mass, and more preferably not greater than 60% by mass. When the content of the SBR is greater than 65% by mass, wear resistance and elongation at break tend to be deteriorated.
A styrene content of the SBR is preferably not less than 30% by mass, more preferably not less than 35% by mass, and even more preferably not less than 40% by mass, from the viewpoint of grip performance during running. The styrene content of the SBR is preferably not greater than 55% by mass, more preferably not greater than 50% by mass, and even more preferably not greater than 45% by mass, from the viewpoint of initial grip performance. In the description herein, the styrene content of the SBR represents a content of a styrene moiety in the SBR, and is calculated by $^1$H-NMR measurement.
A vinyl content of the SBR is preferably not less than 30%, more preferably not less than 35%, and even more

preferably not less than 40%, from the viewpoint of grip performance during running. The vinyl content of the SBR is preferably not greater than 55%, more preferably not greater than 50%, and even more preferably not greater than 45%, from the viewpoint of initial grip performance. In the description herein, the vinyl content of the SBR represents an amount of 1,2-bond unit of the butadiene moiety in the SBR, and is measured by infrared absorption spectrometry.

(BR)

As the BR, various kinds of BRs such as high cis-1,4-polybutadiene rubber (high-cis BR), butadiene rubber (SPB-containing BR) containing 1,2-syndiotactic polybutadiene crystals, and modified butadiene rubber (modified BR), can be used.

The high-cis BR is butadiene rubber in which a cis-1,4 bond content is not less than 90% by mass. Examples of such high-cis BR include BR1220 manufactured by Zeon Corporation, BR130B, BR150B, BR150L manufactured by Ube Industries, Ltd., and BR730 manufactured by JSR Corporation. When the high-cis BR is contained, low-temperature characteristics and wear resistance can be improved.

Examples of the SPB-containing BR include SPB-containing BR in which 1,2-syndiotactic polybutadiene crystals bonded chemically to the BR are dispersed, rather than SPB-containing BR in which 1,2-syndiotactic polybutadiene crystals are merely disposed in the BR. Examples of such SPB-containing BR include VCR-303, VCR-412, VCR-617 manufactured by Ube Industries, Ltd.

The modified BR is obtained by 1,3-butadiene being polymerized by using a lithium initiator, and a tin compound being then added to the polymerized 1,3-butadiene. Furthermore, the modified BR is, for example, modified BR (tin-modified BR) in which the terminal of the modified BR molecule is bonded with a tin-carbon bond, or butadiene rubber (modified BR for silica) having a condensed alkoxysilane compound at an active terminal of the butadiene rubber. Examples of such modified BR include BR1250H (tin-modified) manufactured by Zeon Corporation, and S modified polymer (modified for silica) manufactured by Sumitomo Chemical Company, Limited.

As the modified BR, modified BR (hereinafter, may be also referred to as modified low-cis BR) in which a cis content is not greater than 50% by mass is preferably used. When the modified low-cis BR is blended, dispersibility of silica is improved, and wet grip performance and fuel economy performance can be improved.

Examples of the modified low-cis BR include BR which has a low cis content, and has been modified with a compound having a functional group that includes at least one atom selected from the group consisting of nitrogen, oxygen, and silicon. For example, a terminal-modified low-cis BR obtained by at least one terminal of BR being modified with a compound (modifier) having the above-described functional group, main-chain-modified low-cis BR having the above-described functional group in the main-chain, and main chain/terminal-modified low-cis BR having the above-described functional groups in the main chain and at the terminal (for example, main chain/terminal-modified low-cis BR which has the above-described functional group in the main chain, and in which at least one of the terminals is modified with the above-described modifier) can be used. Among them, the terminal-modified low-cis BR is preferable.

Examples of the functional group include an amino group, an amide group, an alkoxysilyl group, an isocyanate group, an imino group, an imidazole group, a urea group, an ether group, a carbonyl group, an oxycarbonyl group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydroxyl group, an oxy group, and an epoxy group. These functional groups may have substituents. Among them, a primary, secondary, or tertiary amino group (in particular, glycidylamino group), an epoxy group, a hydroxyl group, an alkoxy group (preferably, C1 to C6 alkoxy group), and an alkoxysilyl group (preferably, C1 to C6 alkoxysilyl group) are preferable because the effect of improving fuel economy is high.

As the terminal-modified low-cis BR, modified butadiene rubber (S modified low-cis BR) which has a low cis content and has been modified with a compound represented by chemical formula (I) described below, is preferable.

[Chemical formula 1]

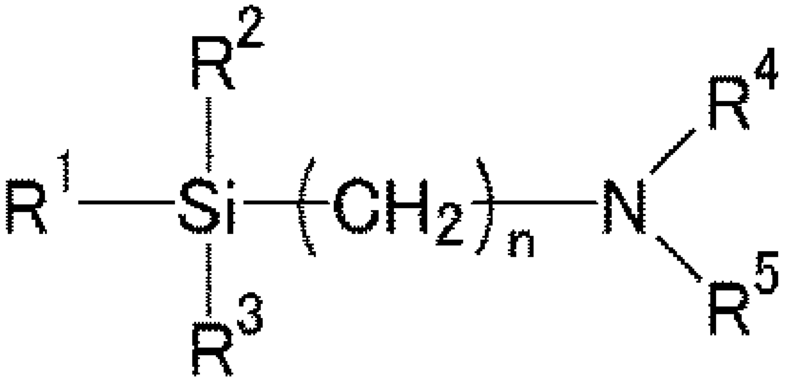

(I)

(in chemical formula (I), $R^1$, $R^2$, and $R^3$ are the same or different from each other, and each represents an alkyl group, an alkoxy group, a silyloxy group, an acetal group, a carboxyl group (-COOH), a mercapto group (-SH), or a derivative thereof. $R^4$ and $R^5$ are the same or different from each other, and each represents a hydrogen atom or an alkyl group. $R^4$ and $R^5$ may be bonded to form a ring structure together with a nitrogen atom. n represents an integer.)

Examples of the S modified low-cis BR are described in Japanese Laid-Open Patent Publication No. 2010-111753, and the like.

In chemical formula (I), $R^1$, $R^2$, and $R^3$ preferably each represent an alkoxy group (preferably C1 to C8 alkoxy group and more preferably C1 to C4 alkoxy group) from the viewpoint of excellent fuel economy and durability being obtained. $R^4$ and $R^5$ preferably each represent an alkyl group (preferably C1 to C3 alkyl group), n is preferably 1 to 5, more preferably 2 to 4, and even more preferably 3. When $R^4$ and $R^5$ are bonded to form a ring structure together with a nitrogen atom, it is preferable that a four to eight-membered ring is formed. Examples of the alkoxy group also include cycloalkoxy groups (cyclohexyloxy group, etc.), aryloxy groups (phenoxy group, benzyloxy group, etc.). When the preferable compound is used, the effects of the present invention can be advantageously obtained.

Specific examples of the compound represented by chemical formula (I) include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable because the above-described performances can be preferably improved. These may be each used alone, or two or more of them may be used in combination.

As a method for modifying butadiene rubber with the compound (modifier) represented by chemical formula (I), a conventionally known method as described in Japanese Examined Patent Publication No. H06-53768, Japanese Examined Patent Publication No. H06-57767, and the like can be used. For example, a method in which butadiene rubber is modified by contact between butadiene rubber and the compound, can be used. Specifically, for example, a method in which butadiene rubber is prepared by anionic polymerization, and a predetermined amount of the compound is then added to the rubber solution, and reaction between the compound and polymerization terminals (active terminals) of the butadiene rubber is caused, can be used.

Furthermore, as the terminal-modified low-cis BR, modified butadiene rubber which has a low cis content and has been modified with a low molecular weight compound containing a glycidylamino group in the molecule, is preferable. For example, modified butadiene rubber which has a low cis content and has been modified with a low molecular weight compound represented by the following chemical formula, can be preferably used.

[Chemical formula 2]

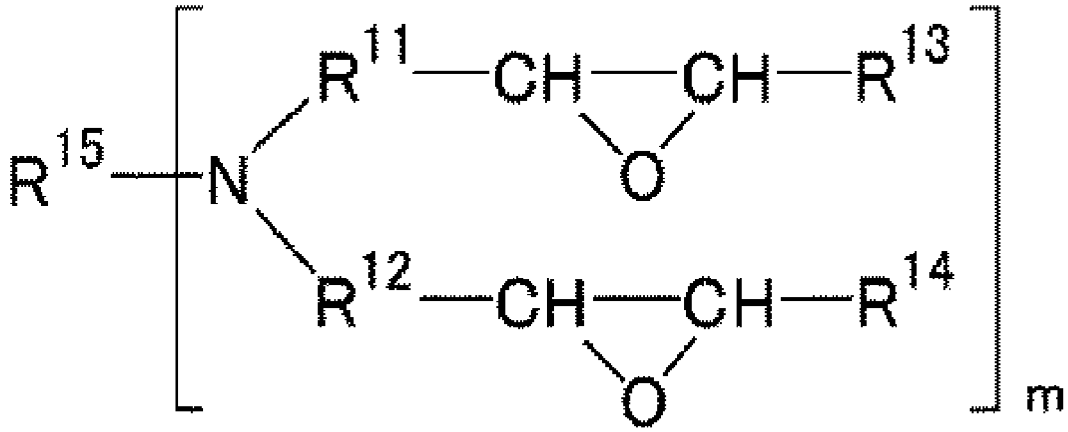

(wherein $R^{11}$ and $R^{12}$ are the same or different from each other, and each represent a C1 to C10 hydrocarbon group, and the hydrocarbon group may have at least one selected from the group consisting of an ether group and a tertiary amine group. $R^{13}$ and $R^{14}$ are the same or different from each other, and each represent a hydrogen atom or C1 to C20 hydrocarbon group, and the hydrocarbon group may have at least one selected from the group consisting of an ether group and a tertiary amine group. $R^{15}$ represents a C1 to C20 hydrocarbon group, and the hydrocarbon group may have at least one selected from the group consisting of an ether group, a tertiary amine group, an epoxy group, a carbonyl group, and a halogen atom. m represents an integer from 1 to 6.)

$R^{11}$ and $R^{12}$ preferably each represent a C1 to C10 alkylene group (preferably C1 to C3). $R^{13}$ and $R^{14}$ preferably each represent a hydrogen atom. $R^{15}$ represents a C3 to C20 hydrocarbon group (preferably C6 to C10 and more preferably C8), preferably represents a cycloalkyl group or a cycloalkylene group represented by the following chemical formula, and more preferably represents a cycloalkylene group.

[Chemical formula 3]

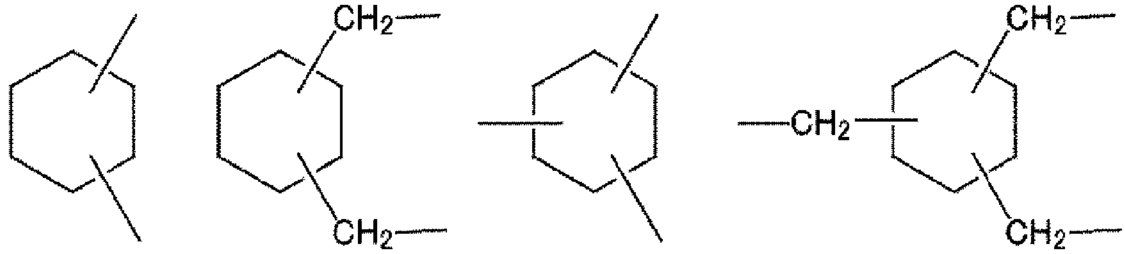

m is preferably from 2 to 3. As the compound represented by the above-described chemical formula, for example, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane are preferably used.

As the terminal-modified low-cis BR, modified butadiene rubber (A modified low-cis BR) which has a low cis content and has been modified with a mixture of a low molecular weight compound containing a glycidylamino group in the molecule, and oligomer that is a dimer or multimer of the low molecular weight compound, is more preferable. Examples of the A modified low-cis BR are described in Japanese Laid-Open Patent Publication No. 2009-275178, and the like.

As the BR, any one of the BRs in the above-described examples may be used alone, or two or more of them may be used in combination.

A content of the BR in the rubber component is not less than 35% by mass, preferably not less than 37% by mass, and more preferably not less than 40% by mass. When the content of the BR is less than 35% by mass, wear resistance tends to be deteriorated. The content of the BR is not greater than 65% by mass, preferably not greater than 60% by mass, and more preferably not greater than 55% by mass. When the content of the BR is greater than 65% by mass, elongation at break and wet grip performance tend to be deteriorated.

A content of the modified low-cis BR in the rubber component is preferably not greater than 20% by mass, more preferably not greater than 15% by mass, and even more preferably not greater than 10% by mass. When the content thereof is greater than 20% by mass, wear resistance tends to be deteriorated.
The total of the content of the SBR and the content of the BR in the rubber component is preferably not less than 70% by mass, more preferably not less than 80% by mass, and even more preferably not less than 90% by mass, from the viewpoint of balance among wet grip performance, rolling resistance, and wear resistance.

(Other rubber component)

In the present embodiment, as a rubber component, other than the SBR and the BR, to be used, a crosslinkable rubber component which is generally used in the rubber industry can be used. Examples of the rubber component include chloroprene rubber (CR), natural rubber (NR), isoprene rubber (IR), acrylonitrile-butadiene rubber (NBR), hydrogenated nitrile rubber (HNBR), isobutylene-isoprene-rubber (IIR), ethylene-propylene rubber, polynorbornene rubber, silicone rubber, chlorinated polyethylene rubber, fluororubber (FKM), acrylic rubber (ACM), and hydrin rubber. These crosslinkable rubber components may be each used alone, or two or more of them may be used in combination.
In particular, in NR, impurities containing nitrogen and phosphorus have an effect of improving compatibility with sulfur. Furthermore, in NR, molecules are likely to be cleaved at the initial stage of a kneading process step, and the weight-average molecular weight that is not less than 1000000 is reduced to about 200000. The properties which are unique to NR and different from those of BR allow sulfur to be uniformly dispersed in the rubber component and consequently allow elongation at break of the rubber composition to be improved.
As the NR, NR that is generally used in the tire industry can be used. Examples of the NR include RSS#3 and TSR20.
A content of the NR in 100% by mass of the rubber component is preferably not greater than 30% by mass and more preferably not greater than 20% by mass. When the content of the NR is greater than 30% by mass, wear resistance tends to be deteriorated.
A content of the rubber component, other than the SBR and the BR, in 100% by mass of the rubber component is preferably not greater than 30% by mass and more preferably not greater than 20% by mass. When the content thereof is greater than 30% by mass, wear resistance tends to be deteriorated.

<Resin component>

As s resin component used in the present embodiment, a rosin-based resin is preferable.

(Rosin-based resin)

Rosin-based resin is a natural resin such as gum rosin, wood rosin, and tall oil rosin which contain, as a main component, resin acid, such as abietic acid, levopimaric acid, neoabietic acid, palustric acid, isopimaric acid, sandaracopimaric acid, pimaric acid, dehydroabietic acid, dihydroabietic acid, and dextropimaric acid, which is obtained by processing turpentine.
Examples of the rosin-based resin of the present embodiment include an ester derivative of rosin (rosin ester resin) and modified products as well as the rosin. Examples of the rosin ester resin include glycerin ester, pentaerythritol ester, dipentaerythritol ester, methyl ester, ethylene glycol ester, diethylene glycol ester, and triethylene glycol ester. Examples of the modified product include rosin-modified phenolic resin and maleic acid-modified rosin resin. Furthermore, the rosin-based resin of the present embodiment may be hydrogenated rosin-based resin obtained by hydrogenating the rosin-based resin. The rosin-based resin is preferably rosin ester resin.
The rosin ester resin is produced by, for example, heating rosin and polyol such as glycerin and pentaerythritol to 200 to 300°C in an inert gas atmosphere, and removing produced water to the outside of the system.
A content of the rosin-based resin is not less than 0.3 parts by mass, preferably not less than 1 part by mass, and more preferably not less than 3 parts by mass, and is preferably not greater than 40 parts by mass, more preferably not greater than 35 parts by mass, and even more preferably not greater than 30 parts by mass, with respect to 100 parts by mass of the rubber component. When the content of the rosin-based resin is within the above-described range, sulfur can be preferably dispersed in the rubber component, and wet grip performance, wear resistance, and elongation at break can be improved in a well-balanced manner.
A weight-average molecular weight (Mw) of the rosin-based resin is preferably 200 to 10000, more preferably 200 to 3000, and even more preferably 200 to 1000. When the rosin-based resin having the Mw in the above-described range is used, compatibility with the SBR and the BR is improved, and wet grip performance, wear resistance, and elongation at break can be improved. The weight-average molecular weight (Mw) of the rosin ester resin is about 1000.
An acid value (mg KOH/g) of the rosin-based resin is preferably not less than 5, more preferably not less than

6, and even more preferably not less than 7. The acid value (mg KOH/g) of the rosin-based resin is preferably not greater than 70, more preferably not greater than 50, and even more preferably not greater than 40. When the acid value of the rosin-based resin is within the above-described range, sulfur can be preferably dispersed in the rubber component, and wet grip performance, wear resistance, and elongation at break can be improved in a well-balanced manner. In the present embodiment, the acid value is represented, by milligram, as an amount of potassium hydroxide which is required to neutralize acid contained in 1g of resin. The acid value is a value measured by potentiometric titration (JIS K 0070:1992).

A glass transition temperature (Tg) of the rosin-based resin is preferably not lower than 20°C, more preferably not lower than 25°C, and even more preferably not lower than 30°C. When the Tg of the rosin-based resin is lower than 20°C, wet grip performance tends to be deteriorated. The Tg of the rosin-based resin is preferably not higher than 70°C, more preferably not higher than 65°C, and even more preferably not higher than 60°C. When the Tg of the rosin-based resin is higher than 70°C, dispersion of the resin is deteriorated, and viscoelasticity characteristics at a low temperature is deteriorated, and wet grip performance rather tends to be deteriorated. In the description herein, the Tg is a value measured at a temperature rising rate of 10°C/minute by using an automatic differential scanning calorimeter (DSC-60A) manufactured by SHIMADZU CORPORATION in compliance with JIS K 7121.

A softening point of the rosin-based resin is preferably not higher than 130°C, more preferably not higher than 125°C, and even more preferably not higher than 120°C. When the softening point of the rosin-based resin is higher than 130°C, dispersion tends to become difficult during kneading. The softening point of the rosin-based resin is preferably not lower than 55°C, more preferably not lower than 60°C, and even more preferably not lower than 65°C. When the softening point of the rosin-based resin is lower than 55°C, blocking (adherence) tends to occur due to humidity, and working efficiency tends to be deteriorated. In the present invention, the softening point is measured by using a flow tester (CFT-500D manufactured by SHIMADZU CORPORATION) in the following method. That is, while 1 g of resin as a sample is heated at a temperature rising rate of 6°C/minute, a load of 1.96 MPa is applied by a plunger, and the resin is extruded through a nozzle having a diameter of 1 mm and a length of 1 mm, a plunger descending distance of the flow tester is plotted against a temperature, and a temperature at which half the sample has flowed is determined as the softening point.

A SP value of the rosin-based resin is preferably 9 to 11. The SP value represents a solubility parameter calculated based on a structure of a compound by the Hoy method. The greater a difference between SP values of two compounds is, the lower the compatibility between the two compounds is. When the resin having the SP value in the above-described range is used, compatibility with the SBR and the BR is improved, and wear resistance and elongation at break can be improved.

As the rosin-based resin, any one of the rosin-based resins in the above-described examples may be used alone, or two or more of them may be used in combination. In the present embodiment, a commercially available rosin-based resin may be used. Examples of the commercially available rosin-based resin include rosin-based resins manufactured by and available from Harima Chemicals, ARAKAWA CHEMICAL INDUSTRIES, LTD., and the like

(Resin other than rosin-based resin)

For the rubber composition of the present embodiment, one or more adhesive resins other than the rosin-based resin can be used as a resin component in combination with the rosin-based resin. As the adhesive resin other than the rosin-based resin, for example, petroleum resin which is generally used for a rubber composition for tires can be used. Specific examples of the petroleum resin include aliphatic petroleum resin, aromatic petroleum resin, phenolic resin, coumarone-indene resin, terpene-based resin, styrene resin, acrylic resin, and dicyclopentadiene resin (DCPD resin). Among them, terpene-based resin such as terpene styrene resin, polyterpene resin, and terpene phenolic resin is preferable, and terpene styrene resin is more preferable. Use of terpene-based resin and another adhesive resin such as coumarone-indene resin, $\alpha$-methylstyrene resin, and dicyclopentadiene resin in combination is also preferable.

The terpene-based resin has a SP value that is less than a SP value of another adhesive resin such as aliphatic petroleum resin, aromatic petroleum resin, phenolic resin, coumarone-indene resin, and the rosin-based resin. The SP value of the terpene-based resin is between the value of SBR (SP value: 8.9) and the value of BR (SP value: 8.2). This is preferable from the viewpoint of compatibility with the rubber component. Among them, terpene styrene resin has a particularly high compatibility with both SBR and BR, and sulfur is likely to be dispersed in the rubber component.

The polyterpene resin is a resin which contains, as a material, at least one selected from terpene compounds such as $\alpha$-pinene, $\beta$-pinene, limonene, and dipentene. The terpene phenolic resin is a resin which contains, as a material, the terpene compound and a phenolic compound. The terpene styrene resin is a resin that contains, as a material, the terpene compound and styrene. The polyterpene resin and the terpene styrene resin may be each a hydrogenated resin (hydrogenated polyterpene resin, hydrogenated terpene styrene resin). A process of hydrogenating terpene-based resin can be performed in a known method. Furthermore, a commercially available hydrogenated resin can be used.

Any one of the terpene-based resins in the above-described examples may be used alone, or two or more of them may be used in combination. In the present embodiment, a commercially available terpene-based resin may be

used. Examples of the commercially available terpene-based resin include terpene-based resins manufactured by and available from YASUHARA CHEMICAL CO., LTD.

A glass transition temperature (Tg) of the adhesive resin other than the rosin-based resin is preferably not lower than 20°C, more preferably not lower than 25°C, and even more preferably not lower than 30°C. When the Tg thereof is lower than 20°C, wet grip performance tends to be deteriorated. The Tg of the adhesive resin other than the rosin-based resin is preferably not higher than 50°C, more preferably not higher than 45°C, and even more preferably not higher than 40°C. When the Tg thereof is higher than 50°C, wear resistance and wet grip performance at a low temperature tend to be deteriorated.

A softening point of the adhesive resin other than the rosin-based resin is preferably not lower than 75°C, more preferably not lower than 80°C, and even more preferably not lower than 90°C, from the viewpoint of facilitating handling. The softening point thereof is preferably not higher than 150°C, more preferably not higher than 140°C, and even more preferably not higher than 130°C, from the viewpoint of improving processability and dispersibility between the rubber component and a filler.

A content of the adhesive resin other than the rosin-based resin is preferably not greater than 40 parts by mass, more preferably not greater than 30 parts by mass, and even more preferably not greater than 20 parts by mass, with respect to 100 parts by mass of the rubber component. When the content thereof is greater than 40 parts by mass, wet grip performance and wear resistance tend to be deteriorated.

The total of the content of the rosin-based resin and the content of the adhesive resin other than the rosin-based resin is preferably not less than 10 parts by mass, more preferably not less than 15 parts by mass, and even more preferably not less than 20 parts by mass, with respect to 100 parts by mass of the rubber component. The total thereof is preferably not greater than 60 parts by mass, more preferably not greater than 55 parts by mass, and even more preferably not greater than 50 parts by mass. When the total thereof is within the above-described range, sulfur can be preferably dispersed in the rubber component, and wet grip performance, wear resistance, and elongation at break can be improved in a well-balanced manner.

<Inorganic filler>

An inorganic filler used in the present embodiment contains silica as the essential component. Furthermore, use of silica and carbon black in combination is preferable.

(Silica)

Silica is not particularly limited. Examples of the silica include dry silica (silicic anhydride), wet silica (hydrous silicic acid), calcium silicate, and aluminium silicate. Wet silica is preferable because it has a higher silanol group content.

A content of the silica is preferably not less than 50 parts by mass, more preferably not less than 55 parts by mass, and even more preferably not less than 60 parts by mass, with respect to 100 parts by mass of the rubber component, from the viewpoint of wet grip performance. The content of the silica is preferably not greater than 140 parts by mass, more preferably not greater than 130 parts by mass, and even more preferably not greater than 125 parts by mass, from the viewpoint of dispersibility of the silica and processability.

A BET specific surface area ($N_2SA$) of the silica is preferably 70 to 300 $m^2/g$, more preferably 80 to 280 $m^2/g$, and even more preferably 90 to 260 $m^2/g$, from the viewpoint of wear resistance and elongation at break. In the description herein, the BET specific surface area of the silica is a value measured by the BET method in compliance with ASTMD3037-93.

(Carbon black)

As the carbon black, carbon black which is generally used for rubber can be used as appropriate. Examples of the carbon black include furnace black, acetylene black, thermal black, channel black, and graphite. Specific preferable examples of the carbon black include N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, and N991. Furthermore, for example, carbon black synthesized by us, other than the above-described carbon black, can be preferably used. These kinds of the carbon black may be each used alone, or two or more of them may be used in combination.

A BET specific surface area ($N_2SA$) of the carbon black is preferably not less than 70 $m^2/g$ and more preferably not less than 90 $m^2/g$, from the viewpoint of reinforcing properties and wear resistance. The BET specific surface area of the carbon black is preferably not greater than 300 $m^2/g$ and more preferably not greater than 250 $m^2/g$, from the viewpoint of dispersibility and heat generation properties. In the description herein, the BET specific surface area of the carbon black is a value measured in compliance with JIS K 6217-2 "Carbon black for rubber industry - Fundamental

characteristics - Part 2: Determination of specific surface area - Nitrogen adsorption methods - Single-point procedures".

When fine particle carbon black is contained as the carbon black, wear resistance of the rubber composition can be improved.

An average particle size of the fine particle carbon black is not greater than 19 nm and preferably not greater than 15 nm. When the average particle size of the fine particle carbon black is greater than 19 nm, wear resistance may be deteriorated. The average particle size of the carbon black is preferably not less than 15 nm from the viewpoint of processability. In the description herein, the average particle size of the carbon black is a value measured by a transmission electron microscope.

Examples of the carbon black having the average particle size of not greater than 19 nm include DIABLACK (average particle size: 19 nm) manufactured by Mitsubishi Chemical Corporation.

When the carbon black is contained, a content of the carbon black is preferably not less than 1 part by mass, more preferably not less than 3 parts by mass, and even more preferably not less than 5 parts by mass, with respect to 100 parts by mass of the rubber component, from the viewpoint of reinforcing properties. The content of the carbon black is preferably not greater than 100 parts by mass, more preferably not greater than 50 parts by mass, and even more preferably not greater than 30 parts by mass, from the viewpoint of processability and heat generation properties.

(Other inorganic fillers)

The rubber composition of the present embodiment may contain an inorganic filler, other than the carbon black and the silica, which is generally used in the rubber industry. Specific examples of the other inorganic fillers include aluminium hydroxide, magnesium sulfate, talc, clay, graphite, and mica. Among them, aluminium hydroxide is preferable from the viewpoint of dispersibility of the silica and improvement of wet grip performance, and flat aluminium hydroxide is particularly preferable because it is excellent also in moldability. One or more of the other inorganic fillers can be used, and one or more of aluminium hydroxide, talc, clay, graphite, and mica can be used.

As the aluminium hydroxide, any aluminium hydroxide which is generally used in this field can be preferably used. As the flat aluminium hydroxide, flat aluminium hydroxide which is industrially produced from bauxite, and which has a flatness ratio from 5 to 30 and an average particle size of not greater than 1.0 μm is preferable because air permeation resistance and adhesiveness in molding are more excellent. When the flat aluminium hydroxide is blended in the rubber composition, the flat aluminium hydroxide blocks air permeation path, resulting in good air permeation resistance being obtained.

An average particle size of the flat aluminium hydroxide is preferably not greater than 1.0 μm and more preferably not greater than 0.9 μm. The lower limit of the average particle size thereof is not particularly defined. The average particle size of the aluminium hydroxide is a value of d50 obtained from a cumulative curve in the secondary aggregation distribution measurement.

A flatness ratio of the flat aluminium hydroxide is preferably 5 to 30 and more preferably 10 to 30. The flatness ratio of the aluminium hydroxide is a value obtained through diffraction in a SEM (Scanning Electron Microscope) image.

A BET specific surface area ($N_2SA$) of the flat aluminium hydroxide is preferably 3 to 100 $m^2/g$ and more preferably 10 to 60 $m^2/g$ because the particles thereof are unlikely to reaggregate, and even a single particle is unlikely to become a fracture nucleus. The BET specific surface area of the aluminium hydroxide is a value measured in compliance with JIS Z 8830 "Determination of the specific surface area of powders (solids) by gas adsorption - BET method".

A Mohs hardness of the flat aluminium hydroxide is preferably not greater than 3 because equipment wear is reduced. The Mohs hardness represents one of material mechanical properties, and is measured in a method which has been widely used in the mining field over a long period of time. In this method, an object to be measured is scratched with the following 10 kinds of minerals sequentially in order, respectively, and, if the object is damaged by one of the minerals, it is determined that the object has a hardness lower than the mineral. The minerals are 1: talc (talcum), 2: gypsum, 3: calcite, 4: fluorite, 5: apatite, 6: orthoclase, 7: crystal (silica), 8: topaz, 9: corundum (alumina), and 10: diamond in order starting from the lowest hardness.

When the aluminium hydroxide is contained, a content of the aluminium hydroxide is preferably not less than 1 part by mass, more preferably not less than 3 parts by mass, and even more preferably not less than 5 parts by mass, with respect to 100 parts by mass of the rubber component, from the viewpoint of dispersibility of the silica and improvement of wet grip performance. The content of the aluminium hydroxide is preferably not greater than 20 parts by mass, more preferably not greater than 15 parts by mass, and even more preferably not greater than 10 parts by mass, from the viewpoint of wear resistance.

In the present embodiment, in order to improve wet grip performance, for example, the rubber composition preferably has water-soluble filler such as magnesium sulfate blended therein. Magnesium sulfate is a water-soluble filler that has oil resistance and water absorbing properties. The water-soluble filler exhibits scratching effect and is dissolved when contacts with a wet road surface, and void holes are generated so as to function as a storage volume and a passage for discharging a water film layer into in the rubber composition, whereby a coefficient of friction can be

expected to be improved.

A content of the entirety of the inorganic fillers is not less than 90 parts by mass, and even more preferably not less than 100 parts by mass, with respect to 100 parts by mass of the rubber component, from the viewpoint of wet grip performance. The content of the entirety of the inorganic fillers is not greater than 150 parts by mass, more preferably not greater than 140 parts by mass, and even more preferably not greater than 130 parts by mass, from the viewpoint of dispersibility of the silica and processability.

A content of the silica in the inorganic fillers is preferably not less than 50% by mass, more preferably not less than 70% by mass, and even more preferably not less than 80% by mass, from the viewpoint of wet grip performance.

<Other components>

The rubber composition of the present embodiment may include as appropriate blending ingredients and additives, other than the above-described rubber components and plasticizer, which have been conventionally used in the tire industry. Examples of the blending ingredients and additives include a silane coupling agent, zinc oxide, wax, an anti-aging agent, stearic acid, a vulcanizing agent, and a vulcanization accelerator.

The silane coupling agent is not particularly limited, and may be any silane coupling agent which has been conventionally used in combination with silica in the rubber industry. Specific examples of the silane coupling agent include: sulfide silane coupling agents such as Si75, Si266 (bis(3-triethoxysilylpropyl)disulfide) manufactured by Evonik Degussa, and Si69 (bis(3-triethoxysilylpropyl)tetrasulfide) manufactured by Evonik Degussa; mercapto silane coupling agents (silane coupling agent having a mercapto group) such as 3-mercaptopropyltrimethoxysilane, and NXT-Z100, NXT-Z45, NXT manufactured by Momentive; vinyl silane coupling agents such as vinyltriethoxysilane; amino silane coupling agents such as (3-aminopropyl)triethoxysilane; glycidoxy silane coupling agents such as $\gamma$-glycidoxypropyltriethoxysilane; nitro silane coupling agents such as 3-nitropropyltrimethoxysilane; and chloro silane coupling agents such as 3-chloropropyltrimethoxysilane. These silane coupling agents may be each used alone, or two or more of them may be used in combination. Among them, the sulfide and the mercapto silane coupling agents are preferable because they are bonded strongly to the silica and low heat generation properties are excellent.

When the silane coupling agent is contained, a content of the silane coupling agent with respect to the silica is preferably not less than 2% by mass and more preferably not less than 3% by mass from the viewpoint of dispersibility of the silica. The content of the silane coupling agent is preferably not greater than 25% by mass and more preferably not greater than 20% by mass from the viewpoint of cost.

When wax is contained, a content of the wax is preferably not less than 0.5 parts by mass and more preferably not less than 1 part by mass, with respect to 100 parts by mass of the rubber component, from the viewpoint of weather resistance of rubber. The content of the wax is preferably not greater than 10 parts by mass and more preferably not greater than 5 parts by mass, from the viewpoint of whitening of the tire due to blooming.

When oil is contained, a content of the oil is preferably not greater than 100 parts by mass and more preferably not greater than 90 parts by mass, with respect to 100 parts by mass of the rubber component, from the viewpoint of assuring good wear resistance. The content of the oil is preferably not less than 5 parts by mass and more preferably not less than 10 parts by mass, from the viewpoint of processability. Processability can be assured also by surfactant, liquid resin, liquid polymer, or the like being added.

The anti-aging agent is not particularly limited, and an anti-aging agent which is used in the rubber industry can be used. Examples of the anti-aging agent include quinoline-based, quinone-based, phenol-based, and phenylenediamine-based anti-aging agents.

When the anti-aging agent is contained, a content of the anti-aging agent is preferably not less than 0.5 parts by mass and more preferably not less than 1 part by mass, with respect to 100 parts by mass of the rubber component, from the viewpoint of ozone crack resistance of rubber. The content of the anti-aging agent is preferably not greater than 10 parts by mass and more preferably not greater than 5 parts by mass, from the viewpoint of wear resistance and grip performance.

Examples of a processing aid include fatty acid metal salt such as zinc stearate. Specific examples of the processing aid include fatty acid soap-based processing aid such as EF44, WB16 manufactured by Struktol. A blending ratio of the processing aid is preferably not less than 0.1 parts by mass, and is not greater than 5 parts by mass and particularly preferably not greater than 3 parts by mass, with respect to 100 parts by mass of the total amount of the rubber.

When stearic acid is contained, a content of the stearic acid is preferably not less than 0.2 parts by mass and more preferably not less than 1 part by mass, with respect to 100 parts by mass of the rubber component, from the viewpoint of processability. The content of the stearic acid is preferably not greater than 10 parts by mass and more preferably not greater than 5 parts by mass, from the viewpoint of a vulcanization rate.

When zinc oxide is contained, a content of the zinc oxide is preferably not less than 0.5 parts by mass and more preferably not less than 1 part by mass, with the respect to 100 parts by mass of the rubber component, from the viewpoint of processability. The content of the zinc oxide is preferably not greater than 10 parts by mass and more

preferably not greater than 5 parts by mass, from the viewpoint of wear resistance.

As a vulcanizing agent, sulfur is preferably used. Examples of the sulfur include powdery sulfur, oil-treated sulfur, precipitated sulfur, colloidal sulfur, insoluble sulfur, and highly dispersible sulfur.

When the sulfur is contained as the vulcanizing agent, a content of the sulfur is preferably not less than 0.5 parts by mass, with respect to 100 parts by mass of the rubber component, from the viewpoint of grip performance and wear resistance. The content of the sulfur is preferably not greater than 3 parts by mass, from the viewpoint of deterioration.

Examples of the vulcanizing agent other than the sulfur include: a vulcanizing agent, containing a sulfur atom, such as TACKIROL V200 manufactured by TAOKA CHEMICAL COMPANY, LIMITED, DURALINK HTS (1,6- hexamethylene sodium dithiosulfate dihydrate) manufactured by Flexsys, and KA9188 (1,6-bis(N,N'-dibenzylthiocarbamoyldithio)hexane) manufactured by LANXESS; and organic peroxide such as dicumyl peroxide.

Examples of the vulcanization accelerator include sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. These vulcanization accelerators may be each used alone, or two or more of them may be used in combination. Among them, sulfenamide-based, thiazole-based, and guanidine-based vulcanization accelerators are preferable, and use of the sulfenamide-based, thiazole-based, and guanidine-based vulcanization accelerators in combination is more preferable.

Examples of the sulfenamide-based vulcanization accelerator include N-tert-butyl-2-benzothiazole sulfenamide (TBBS), N-cyclohexyl-2-benzothiazolyl sulfenamide (CBS), and N, N- dicyclohexyl-2-benzothiazolylsulfenamide (DCBS). Among them, N-cyclohexyl-2-benzothiazolyl sulfenamide is preferable.

Examples of the thiazole-based vulcanization accelerator include 2-mercaptobenzothiazole, cyclohexylamine salt of 2-mercaptobenzothiazole, and di-2-benzothiazolyl disulfide. Among them, 2-mercaptobenzothiazole is preferable.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, and 1,3-di-o-cumenyl-2-propionylguanidine. Among them, 1,3-diphenylguanidine is preferable.

When the vulcanization accelerator is contained, a content of the vulcanization accelerator is preferably not less than 0.1 parts by mass and more preferably not less than 0.5 parts by mass, with respect to 100 parts by mass of the rubber component, from the viewpoint of acceleration of vulcanization. The content of the vulcanization accelerator is preferably not greater than 5 parts by mass and more preferably not greater than 3 parts by mass, from the viewpoint of processability.

<Production of rubber composition and tire>

The rubber composition of the present embodiment can be produced in a known method. For example, the rubber composition can be produced in, for example, a method in which the above-described components are kneaded by using a rubber kneading device such as an open roll, a Banbury mixer, or a sealed kneading machine, and thereafter vulcanized.

Another embodiment of the present invention is a tire having tire members formed from the above-described rubber composition. Examples of the tire members formed from the rubber composition include treads, under treads, carcasses, sidewalls, and beads. Among them, the tire member is preferably a tread because the rubber composition exhibits excellent wet grip performance, wear resistance, and fuel economy.

The tire of the present embodiment can be produced in a standard method by using the above-described rubber composition. That is, an unvulcanized rubber composition obtained by each component being kneaded is extruded and processed so as to have shapes of tire members such as a tread, and the member having been thus obtained is adhered to other tire members on a tire forming machine, and shaped in a standard method to form an unvulcanized tire, and the unvulcanized tire is heated and pressurized in a vulcanizer, to produce the tire.

The category of the tire of the present embodiment is not particularly limited, and the tire of the present embodiment is preferably used as tires for passenger cars, heavy duty tires for trucks and buses, tires for two-wheeled automotive vehicles, run-flat tires, and non-pneumatic tires, and more preferably used for passenger cars. The tire of the present embodiment is suitable for running over a long distance because the tire exhibits excellent wear resistance and durability.

[Examples]

The present invention will be described based on examples. However, the present invention is not limited to examples only.

Various chemicals used in examples and comparative examples will be collectively indicated below.

SBR: NS616 (Mw: 240000, styrene content: 20% by mass, vinyl content: 66% by mass, Tg: - 23°C) manufactured

by Zeon Corporation

BR: CB25 (Nd catalyst-synthesized high-cis BR, cis-1,4 bond content: 98.2% by mass, trans-1,4 bond content: 1.4% by mass, vinyl content: 0.4%, Tg: -110°C) manufactured by LANXESS Modified low-cis BR: N103 (terminal-modified BR obtained by polymerization using a lithium initiator being performed, and the polymerization terminal of BR being modified with mixture of tetraglycidyl-1,3-bisaminomethylcyclohexane and oligomer component thereof, Mw: 550000, Mw/Mn: 1.19, vinyl content: 12% by mass, cis content: 38% by mass, trans content: 50% by mass) manufactured by Asahi Kasei Corp.

NR: TSR20

Carbon black: SHOBLACK N220 (BET: 114 $m^2/g$) manufactured by Cabot Japan

Silica: Ultrasil VN3 (BET: 210 $m^2/g$) manufactured by Evonik Degussa

Aluminium hydroxide: APYRAL 200SM (average particle size: 0.6 μm, flatness ratio: 15, BET: 15 $m^2/g$, Mohs hardness: 3) manufactured by Sumitomo Chemical Company, Limited Silane coupling agent: Si75 (bis(3-triethoxysilylpropyl)disulfide) manufactured by Evonik Degussa

Rosin-based resin 1: HARIESTER TF (rosin-modified glycerin ester, Mw: about 1000, SP value: 10.4, softening point: 80°C, Tg: 42°C, acid value: 8) manufactured by Harima Chemicals Rosin-based resin 2: HARIESTER P (rosin-modified pentaerythritol ester, Mw: about 1000, SP value: 10.4, softening point: 102°C, Tg: 62°C, acid value: 19) manufactured Harima Chemicals Rosin-based resin 3: HARIMACK T-80 (maleic acid-modified rosin resin, Mw: about 1000, SP value: 10.9, softening point: 85°C, Tg: 43°C, acid value: 185) manufactured by Harima Chemicals Rosin-based resin 4: Chinese gum rosin WW (Mw: 333, SP value: 10.4, softening point: 78°C, Tg: 39°C, acid value: 168) manufactured by ARAKAWA CHEMICAL INDUSTRIES, LTD. Rosin-based resin 5: High Rosin S (Mw: about 1000, SP value: 9.6, softening point: 105°C, Tg: 55°C, acid value: 78) manufactured by IREC Co., Ltd.

Styrene resin: SYLVATRAXX4401 (Mw: 700, SP value: 9.1, softening point: 85°C, Tg: 34°C, acid value: 0) manufactured by Arizona Chemical Company

Terpene-based resin 1: YS resin TO125 (terpene styrene resin, Mw: 800, SP value: 8.7, softening point: 125°C, Tg: 64°C, acid value: 0) manufactured by YASUHARA CHEMICAL CO., LTD.

Terpene-based resin 2: YS resin T160 (terpene phenolic resin, Mw: 1200, SP value: 8.8, softening point: 160°C, Tg: 100°C, acid value: 0) manufactured by YASUHARA CHEMICAL CO., LTD.

Terpene-based resin 3: PX resin PX1150N (polyterpene resin, Mw: 1350, SP value: 8.4, softening point: 115°C, Tg: 65°C, acid value: 0) manufactured by YASUHARA CHEMICAL CO., LTD.

Coumarone-indene resin: V-120 (Mw: 960, SP value: 9.0, softening point: 120°C, Tg: 65°C, acid value: 0) manufactured by NITTO CHEMICAL CO., LTD.

Wax: OZOACE 355 manufactured by NIPPON SEIRO CO., LTD.

Stearic acid: stearic acid "Tsubaki" manufactured by NOF CORPORATION

Process oil: Diana Process AH-24 manufactured by Idemitsu Kosan Co., Ltd.

Anti-aging agent: ANTIGENE 6C (N-phenyl-N'-(1,3-dimethylbutyl)-p-phenylenediamine (6PPD)) manufactured by Sumitomo Chemical Company, Limited.

Zinc oxide: two kinds of zinc oxide manufactured by MITSUI MINING & SMELTING CO., LTD.

Sulfur: HK-200-5 (powdery sulfur containing 5% by mass of oil) manufactured by Hosoi Chemical Industry Co., Ltd.

Vulcanization accelerator 1 (sulfenamide-based vulcanization accelerator): NOCCELER NS-G (N-(tert-butyl)-2-benzothiazole sulfenamide (TBBS)) manufactured by Ouchi Shinko Chemical Industrial Co., Ltd.

Vulcanization accelerator 2 (guanidine-based vulcanization accelerator): NOCCELER D (N, N'-diphenylguanidine (DPG)) manufactured by Ouchi Shinko Chemical Industrial Co., Ltd.

Examples and Comparative examples

By using a 1.7 L Banbury mixer manufactured by Kobe Steel, Ltd., blending components other than the sulfur and the vulcanization accelerator were loaded, in accordance with the blending formula indicated in Table 1, such that the filling rate was 58%, and kneaded at 80 rpm for three minutes until the temperature became 140°C. Subsequently, the sulfur and the vulcanization accelerator were added to the obtained kneaded product. Thereafter, the mixture was kneaded at 80°C by using an open roll for five minutes, to obtain an unvulcanized rubber composition having the components blended according to each of examples and comparative examples.

The unvulcanized rubber composition was extruded and shaped into the shape of a tire tread by using an extruding machine with a die having a predetermined shape, and adhered to other tire members to form an unvulcanized tire, and the unvulcanized tire was press-vulcanized at 170°C for 12 minutes, whereby a test tire (size: 180/55ZR17, rim: 5.5×17, internal pressure: 290 kPa) was produced and prepared.

The obtained unvulcanized rubber composition, vulcanized rubber composition, and test tire were evaluated as follows. The evaluation results are indicated in Table 1.

<Wet grip performance test>

The test tires were mounted to all the wheels of an actual vehicle for test (front-engine, front-wheel-drive vehicle produced in Japan, engine displacement: 2000 cc), and a braking distance was measured from an initial speed of 100 km/h at a wet road surface. Wet grip performance is indicated as an index with the index of comparative example 1 being 100 according to the following equation. The greater the index is, the more excellent wet grip performance is. The target value is at least 100, and preferably not less than 105.

$$\text{(Wet grip performance index)} = \text{(braking distance of tire of comparative example 1)} / \text{(braking distance of each test tire)} \times 100$$

<Wear resistance performance test>

The test tires were mounted to all the wheels of an actual vehicle for test (front-engine, front-wheel-drive vehicle produced in Japan, engine displacement: 2000 cc), and the vehicle was caused to run on a dry asphalt road surface over 8000 km, and the depth of a groove in a tire tread portion was measured. A running distance at which the depth of the groove in the tire tread portion was reduced by 1 mm was calculated. Wear resistance performance is indicated as an index with the index of comparative example 1 being 100 according to the following equation. The greater the index is, the more excellent wear resistance is. The target value of the performance is not less than 103.

$$\text{(Wear resistance performance index)} = \text{(running distance at which a tire groove in each test tire was reduced by 1 mm)} / \text{(running distance at which a tire groove in comparative example 1 was reduced by 1 mm)} \times 100$$

<Durability test>

A No. 3 dumbbell type test piece was produced from each vulcanized rubber composition in compliance with JIS K 6251, and tensile test was conducted. Elongation at break (EB) was measured. The elongation at break is indicated as an index with the value of comparative example 1 being 100. The greater the EB index is, the higher rubber strength is and the more excellent durability is. The target value of performance is set such that the EB index is not less than 110.

The target value of the performance is set such that the average value of the wet grip performance index, the wear resistance performance index, and the EB index described above is not less than 105.

[Table 1]

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Blended amount (parts by mass) | SBR | 60 | 60 | 60 | 60 | 60 | 40 | 50 | 60 | 60 | 60 | 50 | 60 | 60 |
| | BR | 40 | 40 | 40 | 40 | 40 | 60 | 40 | 30 | 30 | 40 | 50 | 40 | 40 |
| | Modified low-cis BR | - | - | - | - | - | - | - | 10 | - | - | - | - | - |
| | NR | - | - | - | - | - | - | 10 | - | - | - | - | - | - |
| | Carbon black | 5 | 5 | 5 | 5 | 5 | 5 | 5 | 5 | 5 | 5 | 5 | 5 | 5 |
| | Silica | 100 | 100 | 100 | 100 | 100 | 100 | 100 | 100 | 80 | 130 | 130 | 100 | 80 |
| | Aluminium hydroxide | - | - | - | - | - | - | - | - | 10 | - | 10 | - | 10 |
| | Silane coupling agent | 8 | 8 | 8 | 8 | 8 | 8 | 8 | 8 | 6.4 | 10.4 | 10.4 | 8 | 6.4 |
| | Rosin-based resin 1 | 20 | - | - | - | - | 35 | 20 | 20 | 20 | 20 | 20 | 20 | 5 |
| | Rosin-based resin 2 | - | 20 | - | - | - | - | - | - | - | - | - | - | - |
| | Rosin-based resin 3 | - | - | 20 | - | - | - | - | - | - | - | - | - | - |
| | Rosin-based resin 4 | - | - | - | 20 | - | - | - | - | - | - | - | - | - |
| | Rosin-based resin 5 | - | - | - | - | 20 | - | - | - | - | - | - | - | - |
| | Terpene-based resins 1 | - | - | - | - | - | - | - | - | - | 20 | 20 | 20 | 25 |
| | Wax | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 |
| | Process oil | 20 | 20 | 20 | 20 | 20 | 5 | 20 | 20 | 10 | 15 | 15 | 5 | 5 |
| | Anti-aging agent | 2.5 | 2.5 | 2.5 | 2.5 | 2.5 | 2.5 | 2.5 | 2.5 | 2.5 | 2.5 | 2.5 | 2.5 | 2.5 |
| | Zinc oxide | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 1.3 | 1.3 | 1.3 | 1.3 | 1.3 | 1.3 | 1.3 | 1.3 | 1.3 | 1.3 | 1.3 | 1.3 | 1.3 |
| | Vulcanization accelerator 2 | 2.5 | 2.5 | 2.5 | 2.5 | 2.5 | 2.5 | 2.5 | 2.5 | 2.5 | 2.5 | 2.5 | 2.5 | 2.5 |
| Evaluation Result | Wet grip performance index | 102 | 102 | 100 | 100 | 102 | 101 | 101 | 112 | 101 | 112 | 117 | 108 | 102 |
| | Wear resistance performance index | 103 | 102 | 100 | 100 | 103 | 102 | 103 | 102 | 100 | 100 | 102 | 108 | 101 |
| | EB index | 120 | 121 | 115 | 114 | 112 | 117 | 122 | 117 | 116 | 123 | 114 | 114 | 112 |
| | Average of comprehensive performance | 108 | 108 | 105 | 105 | 106 | 107 | 109 | 110 | 106 | 112 | 111 | 110 | 105 |

[Table 2]

| | | Comparative example | | | | | | | | | |
|---|---|---|---|---|---|---|---|---|---|---|---|
| | | 1 | 2 | 3 | 4 | 5 | 6 | 7 | 8 | 9 | 10 |
| Blended amount (parts by mass) | SBR | 60 | 60 | 60 | 60 | 60 | 60 | 70 | 70 | 60 | 70 |
| | BR | 40 | 40 | 40 | 40 | 40 | - | 30 | 30 | 40 | 30 |
| | NR | - | - | - | - | - | 40 | - | - | - | - |
| | Carbon black | 5 | 5 | 5 | 5 | 5 | 5 | 5 | 5 | 5 | 5 |
| | Silica | 100 | 100 | 100 | 100 | 100 | 100 | 100 | 100 | 75 | 75 |
| | Silane coupling agent | 8 | 8 | 8 | 8 | 8 | 8 | 8 | 8 | 6 | 6 |
| | Rosin-based resin 1 | - | - | - | - | - | 20 | - | 20 | 15 | 15 |
| | Styrene resin | 20 | - | - | - | - | - | 20 | - | - | - |
| | Terpene-based resin 1 | - | 20 | - | - | - | - | - | - | - | - |
| | Terpene-based resin 2 | - | - | 20 | - | - | - | - | - | - | - |
| | Terpene-based resin 3 | - | - | - | 20 | - | - | - | - | - | - |
| | Coumarone-indene resin | - | - | - | - | 20 | - | - | - | - | - |
| | Wax | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 |
| | Process oil | 20 | 20 | 20 | 20 | 20 | 20 | 20 | 20 | 5 | 5 |
| | Anti-aging agent | 2.5 | 2.5 | 2.5 | 2.5 | 2.5 | 2.5 | 2.5 | 2.5 | 2.5 | 2.5 |
| | Zinc oxide | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 |
| | Vulcanization accelerator 1 | 1.3 | 1.3 | 1.3 | 1.3 | 1.3 | 1.3 | 1.3 | 1.3 | 1.3 | 1.3 |
| | Vulcanization accelerator 2 | 2.5 | 2.5 | 2.5 | 2.5 | 2.5 | 2.5 | 2.5 | 2.5 | 2.5 | 2.5 |
| Evaluation Result | Wet grip performance index | 100 | 102 | 98 | 95 | 97 | 107 | 104 | 105 | 82 | 92 |
| | Wearresistance performance index | 100 | 102 | 97 | 100 | 101 | 72 | 92 | 96 | 101 | 95 |
| | EB index | 100 | 107 | 103 | 103 | 104 | 129 | 95 | 110 | 122 | 125 |
| | Average of comprehensive performance | 100 | 104 | 99 | 99 | 101 | 103 | 97 | 104 | 102 | 104 |

The results in Table 1 and Table 2 indicate that the tire having the tire members formed from the rubber composition of the present invention exhibits excellent wet grip performance, wear resistance performance, and elongation at break in a well-balanced manner.

The rubber composition for a tread and the tire having a tread formed from the rubber composition according to the present invention exhibit excellent wet grip performance, wear resistance performance, and elongation at break.

## Claims

1. A rubber composition for a tread, the rubber composition comprising:

   90 to 150 parts by mass of an inorganic filler including silica, with respect to 100 parts by mass of a rubber component that includes 35 to 65% by mass of styrene butadiene rubber and 35 to 65% by mass of butadiene rubber; and
   0.3 to 40 parts by mass of a rosin-based resin with respect to 100 parts by mass of the rubber component.

2. The rubber composition according to claim 1, wherein an acid value of the rosin-based resin is 5 to 70.

3. The rubber composition according to claim 1 or 2, wherein a softening point of the rosin-based resin is 55°C to 130°C.

4. The rubber composition according to any one of claims 1 to 3, wherein the rosin-based resin is a rosin ester resin.

5. The rubber composition according to any one of claims 1 to 4, further comprising an adhesive resin other than the rosin-based resin, the adhesive resin having a glass transition temperature of not lower than 20°C, wherein
   a total content of the adhesive resin is 10 to 60 parts by mass.

6. The rubber composition according to any one of claims 1 to 5, wherein a terpene-based resin is included as the adhesive resin other than the rosin-based resin.

7. The rubber composition according to any one of claims 1 to 6, wherein a content of the silica in the inorganic filler is not less than 50% by mass.

8. The rubber composition according to any one of claims 1 to 7, wherein modified low-cis butadiene rubber is contained in the butadiene rubber.

9. The rubber composition according to any one of claims 1 to 8, wherein aluminium hydroxide is further included in the inorganic filler.

10. A tire having a tread formed from the rubber composition, for a tread, according to any one of claims 1 to 9.

## Patentansprüche

1. Kautschukzusammensetzung für einen Laufstreifen, wobei die Kautschukzusammensetzung umfasst:

   90 bis 150 Massenteile eines anorganischen Füllstoffes, der Siliciumdioxid enthält, bezogen auf 100 Massenteile einer Kautschukkomponente, die 35 bis 65 Massenprozent Styrol-ButadienKautschuk und 35 bis 65 Massenprozent Butadienkautschuk enthält; und
   0,3 bis 40 Massenteile eines Kolophonium-basierten Harzes, bezogen auf 100 Massenteile der Kautschukkomponente.

2. Kautschukzusammensetzung nach Anspruch 1, wobei eine Säurezahl des Kolophonium-basierten Harzes 5 bis 70 beträgt.

3. Kautschukzusammensetzung nach Anspruch 1 oder 2, wobei ein Erweichungspunkt des Kolophonium-basierten Harzes 55°C bis 130°C beträgt.

4. Kautschukzusammensetzung nach einem der Ansprüche 1 bis 3, wobei das Kolophonium-basierte Harz ein Kolophoniumester-Harz ist.

5. Kautschukzusammensetzung nach einem der Ansprüche 1 bis 4, die neben dem Kolophonium-basierten Harz zudem ein Klebeharz umfasst, wobei das Klebeharz eine Glasübergangstemperatur von nicht niedriger als 20°C aufweist, wobei
   ein Gesamtgehalt des Klebeharzes 10 bis 60 Massenteile beträgt.

**6.** Kautschukzusammensetzung nach einem der Ansprüche 1 bis 5, wobei ein Terpen-basiertes Harz als das Klebeharz neben dem Kolophonium-basierten Harz enthalten ist.

**7.** Kautschukzusammensetzung nach einem der Ansprüche 1 bis 6, wobei ein Gehalt des Siliciumdioxids in dem anorganischen Füllstoff nicht weniger als 50 Massenprozent beträgt.

**8.** Kautschukzusammensetzung nach einem der Ansprüche 1 bis 7, wobei modifizierter niedrig-cis-Butadienkautschuk in dem Butadienkautschuk enthalten ist.

**9.** Kautschukzusammensetzung nach einem der Ansprüche 1 bis 8, wobei zudem Aluminiumhydroxid in dem anorganischen Füllstoff enthalten ist.

**10.** Reifen, der einen Laufstreifen aufweist, welcher mit der Kautschukzusammensetzung für einen Laufstreifen nach einem der Ansprüche 1 bis 9 gebildet ist.

**Revendications**

**1.** Composition de caoutchouc pour une bande de roulement, la composition de caoutchouc comprenant :

90 à 150 parties en masse d’une charge inorganique incluant de la silice, par rapport à 100 parties en masse d’un composant caoutchouc qui inclut 35 à 65 % en masse de caoutchouc styrène-butadiène et 35 à 65 % en masse de caoutchouc butadiène ; et
0,3 à 40 parties en masse d’une résine à base de colophane par rapport à 100 parties en masse du composant caoutchouc.

**2.** Composition de caoutchouc selon la revendication 1, dans laquelle l’indice d’acide de la résine à base de colophane est de 5 à 70.

**3.** Composition de caoutchouc selon la revendication 1 ou 2, dans laquelle le point de ramollissement de la résine à base de colophane est compris entre 55 °C et 130 °C.

**4.** Composition de caoutchouc selon l’une quelconque des revendications 1 à 3, dans laquelle la résine à base de colophane est une résine d’ester de colophane.

**5.** Composition de caoutchouc selon l’une quelconque des revendications 1 à 4, comprenant en outre une résine adhésive autre que la résine à base de colophane, la résine adhésive ayant une température de transition vitreuse non inférieure à 20 °C, dans laquelle
la teneur totale de la résine adhésive est de 10 à 60 parties en masse.

**6.** Composition de caoutchouc selon l’une quelconque des revendications 1 à 5, dans laquelle une résine à base de terpène est incluse comme résine adhésive autre que la résine à base de colophane.

**7.** Composition de caoutchouc selon l’une quelconque des revendications 1 à 6, dans laquelle une teneur en silice de la charge inorganique n’est pas inférieure à 50 % en masse.

**8.** Composition de caoutchouc selon l’une quelconque des revendications 1 à 7, dans laquelle du caoutchouc butadiène modifié à faible teneur en cis est contenu dans le caoutchouc butadiène.

**9.** Composition de caoutchouc selon l’une quelconque des revendications 1 à 8, dans laquelle de l’hydroxyde d’aluminium est en outre inclus dans la charge inorganique.

**10.** Pneumatique ayant une bande de roulement formée à partir de la composition de caoutchouc pour une bande de roulement selon l’une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012512290 W
- JP 536206 B
- US 2013331498 A1
- JP 2010111753 A
- JP H0653768 B
- JP H0657767 B
- JP 2009275178 A